(19) **Europäisches Patentamt / European Patent Office / Office européen des brevets**

(11) **EP 1 482 012 B1**

(12) **EUROPEAN PATENT SPECIFICATION**

(45) Date of publication and mention
of the grant of the patent:
**14.03.2007 Bulletin 2007/11**

(51) Int Cl.:
***C08L 95/00*** *(2006.01)* ***C08K 5/101*** *(2006.01)*

(21) Application number: **03076648.9**

(22) Date of filing: **28.05.2003**

(54) **Bituminous binder composition**

Zusammensetzung auf Basis eines bituminösen Bindemittels

Composition de liant bitumineux

(84) Designated Contracting States:
**AT BE BG CH CY CZ DE DK EE ES FI FR GB GR HU IE IT LI LU MC NL PT RO SE SI SK TR**
Designated Extension States:
**LT LV**

(43) Date of publication of application:
**01.12.2004 Bulletin 2004/49**

(73) Proprietor: **Latexfalt B.V.**
**2396 AP Koudekerk a/d Rijn (NL)**

(72) Inventors:
• **Lommerts, Bert Jan**
  **1703 RB Heerhugowaard (NL)**
• **van Loef, Anton Nico**
  **2324 MC Leiden (NL)**
• **Ruiter, Wilhelmina Evelien**
  **3511 AB Utrecht (NL)**
• **Nederpel, Quirinus Adrianus**
  **2681 HL Monster (NL)**

(74) Representative: **Jorritsma, Ruurd et al**
**Nederlandsch Octrooibureau**
**Postbus 29720**
**2502 LS Den Haag (NL)**

(56) References cited:
**DE-A- 19 519 539** **US-A- 6 156 113**

**Description**

Field of invention

The invention relates to a volatile solvent-free modified bituminous binder composition, to a process for the preparation thereof, and to the application of this composition in surface dressing, for road construction and renovation and sealing purposes in particular.

Background

Surface dressing, often also referred to as chip seal, is a well-known technique for renovating road surfaces and to create a new sealant layer in order to increase the life cycle of the road surface and road system. At present two major systems for surface dressing can be distinguished, i.e. aggregates bonded to the road surface via a bitumen emulsion system or aggregates bonded via a bitumen cutback system. Both systems can be modified using well-known polymers like styrene-butadiene diblock and styrene-butadiene-styrene triblock copolymers, ethylene-vinylacetate copolymers, polybutadiene polymers or other systems. For unsaturated polymers cross-linking can be induced by sulfur or other cross-linking techniques in order to increase the elastic properties of the binder.

A rather low initial viscosity, i.e. the viscosity right after application, is required because the emulsion or cutback binder is sprayed on the road surface and after a certain period aggregates are spread over the binding layer. The low viscosity allows the embedding of the aggregate chips into the binder layer and is also enhancing the adhesion between the binder and aggregate. Adhesion is essential in order to create the required sealant properties and to maintain a high skid resistance during trafficking.

For emulsion systems the low viscosity is maintained for some hours, because the evaporation of water is relatively slow. After spreading the aggregate over an emulsion layer, breaking of the emulsion is enhanced because of the acid-base interactions between the primarily used cationic emulsion and the aggregates, which most often have certain basicity at the surface. An obvious drawback of emulsion systems is that they are sensitive to moisture, e.g. rain, during and after application, which limits their use to certain climatologically determined conditions.

Cutbacks are bitumen systems to which a low molecular weight volatile solvent is added in order to maintain a low initial viscosity. Such a bituminous binder composition is for instance disclosed in CH A 641.822. Therein, xylene and toluene or other crude oil derivatives are applied to reduce the viscosity of the binder prior to spreading. These volatile solvents evaporate slowly over time in order to create the required toughness in the binder layer. The bituminous binder composition according to CH A 641.822 further comprises thermoplastic polymers, which are blended with the bitumen in a homogeneous manner using a vegetable oil.

For cutback surface dressing applications it is required to establish good adhesion between aggregate and binder, which in practise is achieved by adding an adhesion promoter. Such an adhesion promoter often consists of fatty amines and is typically added in amounts ranging from 0.1 - 0.5 wt.%, based on the total formulation. The adhesion strength and the effectiveness of the adhesion promoter can be determined using art-known tests, such as the NEN-EN 12272-3 (1997) test or the NEN-EN 3960 test. With these tests it is determined that commercially available cutback systems show significant failure at temperatures as low as -20°C and that the use of adhesion promoters increases the adhesion strength overall with at least 30 %. However, the use of adhesion promoters has the disadvantage that these compounds substantially contribute to the cost of the composition and possess potential negative long-term effects on the environment.

Cutbacks demonstrate in general outstanding properties for surface dressing applications, viz. a high elasticity in case of modified binders, almost flawless application, almost no failures of properly polymer modified cutback systems, easily applicable, low transportation costs because no water has to be transported, etc.. However, a major drawback of these systems, like the system disclosed in CH A 641.822, is that environmental contamination, i.e. certain air pollution, takes place during the evaporation process of the solvent used.

Summarizing, from the current technology base within the road industry one can conclude that emulsions are at present well established products as they have none or very limited impact on the environment, whereas cutbacks are still favorable from a performance and application point of view. However, only recent developments are focusing on the environmental impact of cutbacks and at present the systems used still contain a relatively large amount of volatile solvents. Consequently, there is still a need for improving such systems.

Within the coating industry lots of efforts are dedicated to produce paints based on water-born systems. Inorganic chemicals or siccatives (salts) which enhance cross-linking of unsaturated systems often enhance curing of a coating system. These salts consist often of heavy metal salts, like cobalt salts, which are compatibilised with the apolar coating system.

A volatile solvent-free bituminous binder is disclosed in EP A 568.757. The surface dressing system comprises bitumen and an environment-friendly animal or vegetable oil. After spreading the required layer toughness is achieved by polymerisation of the renewable oil. However, such a composition does not have the sufficiently low viscosity which is often required in handling of a bituminous binder composition and the actual spraying in road applications, especially at those conditions of low temperature. The addition of stearic acid which have a apolar backbone and a polar head-group by nature as a compatibiliser and as an additional thinner (lower viscosity) is necessary to control the viscosity of the bituminus binder.

Another volatile solvent-free surface dressing system is disclosed in EP A 900.822. In the absence of evaporation of solvents, the increase in consistency of the binder after spreading involves chemical reactions in the presence of atmospheric oxygen. Thereto, the binder comprises bitumen, an organic viscosity reducer from renewable resources, i.e. a monoester of a fatty acid, in particular the methyl ester of a fatty acid wherein the fatty acid is preferably derived from rapeseed oil or sunflower oil, and a siccative or catalyst, preferably compatibilised heavy metal salts, more preferably cobalt salts and most preferably a mixture of heavy metal salts such as cobalt naphtenate and zirconium octoate. The heavy metal salt or salts induce the formation of peroxide bridges -O-O- on the unsaturated chains of the fatty acids. These bridges are unstable and result in the formation of free radicals, which attack other chains, producing, by propagation, a cross-linking of the esters.

A major drawback of this system is that the composition contains a relatively large amount of heavy metal salt. In many countries the use of heavy metals like cobalt and zirconium in construction materials is severely restricted by law or even prohibited by law because of their long term negative environmental impact

DE 19519539 A1 discloses a bituminous binder composition comprising bitumen, an elastomer, an ester and a curing agent.

<u>Description of the invention</u>

It is the object of the invention to provide a bituminous binder composition that does not have the above-mentioned drawbacks. This bituminous binder composition according to the invention comprises bitumen, an elastomer, an ester diluent and a curing agent, wherein the ester diluent comprises a $C_1$-$C_4$ alkyl ester of an unsaturated fatty acid.

The bitumen is a paraffinic or a naphtenic bitumen with an average penetration of 10 to 350 $10^{-1}$ mm, preferably 70 to 220 $10^{-1}$ mm.

Conventional bitumen does often not retain sufficient elasticity in use and also exhibits a plasticity range which is too narrow for use in e.g. road construction. It is known that the characteristics of road asphalts and the like can be greatly improved by incorporating into them an elastomer which may be for example an ethylene-vinylacetate copolymer, a polybutadiene, an ethylene-propylene copolymer, an ethylene-propylene-diene terpolymer, a butadiene-styrene diblock copolymer or a styrene-butadiene-styrene (SBS) triblock terpolymer. However, according to the invention, it is preferred that the elastomer is a polymer or a resin comprising two adjacent butadiene units, most preferably a polybutadiene, a butadiene-styrene diblock copolymer or a styrene-butadiene-styrene triblock terpolymer, more preferably polybutadiene, in particular because of their good compatibility with bitumen and their excellent visco-elastic properties.

Current practise is to add the desired level of a single elastomer, sometimes along with a curing agent which promotes cross-linking of the elastomer, until the desired properties are met. However, cost of the elastomer adds significantly to the overall cost of the resulting bitumen/elastomer composition. In addition, at increasing levels of elastomer concentration, the working viscosity of the bitumen/elastomer composition becomes excessively great and separation of bitumen and elastomer may occur.

It is surprisingly found that in the bituminous binder composition according to the present invention the elastomer content can be at an economically advantageous low level which is still able to modify the properties of the binder composition favourably. The bituminous binder composition according to the invention comprises 0.05 to 5.0 wt.%, preferably 0.1 to 2.0 wt.%, of the elastomer, based on the total weight of the bituminous binder composition.

As a viscosity reducer the bituminous binder composition further comprises an ester diluent, which comprises a $C_1$-$C_4$ alkyl ester of an unsaturated fatty acid. This component provides the low viscosity of the bituminous binder composition that is required for transport and spraying of the bituminous binder composition on the road surface.

Unsaturated fatty acid alkyl esters are good solvents for bitumen and are neither toxic nor harmful to the environment. They have a low viscosity and an ignition point of the order of 200°C, instead of 50° to 85°C approximately for petroleum derived organic solvents (thinners) or fluxing oils.

Preferably, the unsaturated fatty acid is derived from an animal or vegetable oil. Vegetable oils result from the grinding up of various kinds of grains or seeds. Among these oils pressed from oily seeds are lineseed, as well as the oil of sunflower, soybean, pumpkin seed, sesam, olive, nuts and maize. The preferred unsaturated fatty acid is derived from rapeseed oil, sunflower oil or isomerised sunflower oil. The alkyl esters used in the invention can also be obtained from animal oils or from other sources. Useful animal fats are Hog's fat, beef tallow and wool fat.

According to the present invention, the fatty acid esters are derived from $C_1$-$C_4$ alcohols, more preferably from methanol and ethanol and in particular from methanol.

The unsaturated fatty acid comprises a variable number of carbon-carbon double bonds depending on the plant or animal from which the oil originates. The unsaturated fatty acids and the corresponding ester have a reducing power which is a function of the number of double bonds and of the closeness of the latter in the hydrocarbon chain. In the invention these double bonds can be used in improving the elastomeric properties of the bituminous binder composition and in reducing the viscosity hereof after spreading. Polymerization of these bonds causes thickening and hardening. The unsaturated fatty acid of the present invention contains preferably at least two carbon-carbon double bonds.

The $C_1$ - $C_4$ alkyl fatty acid esters are preferably obtained from the transesterification of vegetable or animal oils by means of the alkyl alcohol. Such processes and products are known in the art which were originally developed as substitutes for gas oil. As mentioned above, methyl, ethyl, n-propyl, i-propyl, n-butyl, s-butyl or t-butyl alcohol can be applied, although it is preferred to employ methanol.

The most preferred ester diluent of the invention is a rapeseed methyl monoester, a sunflower methyl monoester or an isomerised sunflower methyl monoester.

The bituminous binder composition comprises 0.3 to 30.0 wt.%, preferably 1.0 to 10.0 wt.% and most preferably 2.0 to 8.0 wt.% of the ester diluent, based on the total weight of the bituminous binder composition.

The stability of the bituminous binder composition is further improved using a curing agent. The curing agent comprises a sulfur-donor compound. It can further comprise vulcanisation accelarators, either with or without sulfurdonating features. For further details on these types of vulcanisation accelerators and which can be employed in the constitution of the curing agent, reference is made to US 5.605.946. Also other curing packages commonly used in the rubber industry can be applied.

However, it is preferred that the curing agent comprises sulfur, stearic acid or a salt thereof, zinc oxide and/or tetramethyl thiuram disulfide. Such a curing agent is for instance commercially available from Latexfalt B.V., the Netherlands, under the trade name SURMAC DO.

The bituminous binder composition according to the invention comprises preferably 0.01 to 1.0 wt.% of the curing agent, based on the total weight of the bituminous binder composition and more preferably 0.02 - 0.5 wt.%.

It is another object of the present invention to provide a process of producing a bituminous binder composition according the invention. This process comprises the steps of:

(a) mixing an elastomer and an ester diluent at a temperature of 50° to 150°C;
(b) adding at least a part of the mixture as obtained in step (a) to bitumen that has been preheated to a temperature in the range of 100° to 210°C; and
(c) adding a curing agent to mixture as obtained in step (b).

The elastomer and the ester diluent are mixed until a viscous and homogeneous solution is obtained. The weight ratio of the elastomer and the ester diluent is preferably in the range of 1:3 to 1:15, preferably 1:4 to 1:10, based on the total weight of the mixture of elastomer and ester diluent.

Dissolving concentrations of up to 20 wt.% of the elastomer can be achieved with standard dissolving stirrers which only can apply a limited shear to the mixture while stirring. The temperature is preferably in the range of 50° to 150°C, preferably in the range of 80° to 130°C, in particular because higher temperatures may effect oxidation and polymerisation of the elastomer when performed in the presence of air. Hence, it is preferred to perform the dissolving operation in an inert atmosphere, e.g. nitrogen. Homogeneous mixtures with higher concentrations of elastomers can be achieved using high shear dissolving equipment like high shear kneaders, extruders or milling systems.

The mixture obtained in step (a) can be very well processed between a temperature of 50° and 130°C with commonly used storage, pumping and piping equipment in the bitumen industry, although lower and higher temperatures can be used as well.

In a next step (b) the bitumen to be modified is preferably preheated to a temperature in the range of 150° to 200°C, more preferably to 160° to 190°C. To this preheated bitumen at least a part of the mixture as obtained in step (a) is added, the amount depending on the required elasticity of the final bituminous binder composition in surface dressing applications. However, according to the invention it is preferred that the mixture as obtained in step (a) is added to the bitumen, wherein the weight ratio of the mixture as obtained in step (a) and the bitumen is in the range of 1:4 to 1:99, preferably 1:8 to 1:50, based on the total weight of the bituminous binder composition.

Preferably the bitumen is modified with only 0.05 to 5.0 wt.% of elastomer, most preferably with 0.1 to 2.0 wt.%, based on the total weight of the bituminous binder composition. Even at these low elastomer concentrations a high degree of elasticity can be obtained in the final surface dressing system, even when measured immediately after application of the surface dressing binder.

In step (c) a curing agent according the invention is added to the mixture. After addition of this curing agent the mixture is maintained at a temperature between 100°C and 210 °C, preferably 160 °C to 190 °C while stirring gently. After 60 minutes the product is ready for use. The curing agent is preferably a prepacked curing agent in a meltable or a low-melting plastic bag, e.g. a polyethylene comprising bag.

The bituminous binder composition according to the invention was subjected to a comparative stripping test according to NEN-EN 3960. Instead of the standard conditions, i.e. in water at 40°C and 3 hours immersion time, it was chosen to use more severe conditions of 70°C and 0.5 hours, as these discriminate much better between the actual performance. This test will be addressed from hereon as ACCELERATED NEN-EN 3960. In the test compositions according to the invention containing 0.4 wt.% Promak Addibit L 100 (a fatty amine additive supplied by ACO DRAIN B.V.) were compared with the same compositions that did not contain this additive. The ratio of the stripping test performance according to ACCELERATED NEN-EN 3960 at 70°C of a composition according to the invention not containing Promak Addibit L 100 and that of the same composition containing 0.4 wt.% Promak Addibit L 100 appears to be at least 0.75. Consequently, according to the invention the bituminous binder composition is characterised by a stripping test performance ratio determined according to ACCELERATED NEN-EN 3960 according to the following formula:

$$\frac{\text{Bituminous binder composition containing 0.0 wt.\% Promak Addibit L 100}}{\text{Bituminous binder composition containing 0.4 wt.\% Promak Addibit L 100}} \geq 0.75$$

According to the invention, the stripping test performance ratio is preferably at least 0.80, more preferably at least 0.85, even more preferably 0.90, most preferably at least 0.95 and in particular at least 0.97.

The bituminous binder composition according to the invention was also subjected to a comparative Vialit test according to NEN-EN 12272-3. According to the invention the bituminous binder composition is characterised by loss of stone after impact deformation at -10°C of less than 80% according to the Vialit NEN-EN 12272-3 test, based on a bituminous binder composition containing 0.4 wt.% Promak Addibit L 100.

The present invention further relates to the use of the bituminous binder composition according to the invention in surface dressing, in particular to road construction, road renovation and sealing purposes. The present invention also relates to the use of the bituminous binder composition according to the invention for emulsion applications, which can for example be used in bond coat (or tack coat) applications and industrial e.g. metal protection applications.

The following examples further illustrate the present invention without limiting the scope of the appended claims.

Example 1

A polybutadiene (PB) with the trademark Intene 50A is purchased from Polymeri Europa (former Enichem). This sample is cut into small pieces of 4 - 8 mm. 3320 g of rapeseed oil methyl ester (RME), obtained from Mosselman, Ghlin (Belgium) is put in a metal vessel on a heating plate. To the RME 680 g of the cut polybutadiene is added. A dissolver with a geometry of half a circle with a diameter of 35 % of the diameter of the metal vessel is mounted to a motor. At a stirring speed of 200 rpm, without any inertization of the surface of the RME-PB mixture, the mixture is heated to a temperature of 110°C. After several minutes the polymer starts to swell and the dissolution process starts. After 8 hours of stirring a solution is obtained which is stored at 110°C overnight. A film of the solution with a thickness of approximately 200 μm shows no polymer lumps as determined visually. The homogeneous solution was further diluted to 15 wt.% of PB in RME using the same stirring equipment as described above. This solution has a viscosity of 0.919 Pa.s at 120°C, as measured using a Haake Rheostress RS1 viscometer. This example is showing that polybutadiene can be dissolved in RME using normal mixing and stirring equipment.

Example 2

A sample consisting of 3500 g of (paraffinic) bitumen 160/220, obtained from Kuwait Petroleum Rotterdam, and 245 g of the RME/PB-solution of example 1 is cured at 160°C using 9.4 g of SURMAC DO from Latexfalt B.V. The viscosity of this mixture at 123°C is 0.530 Pa.s. A thin film of 1.3 mm is sprayed on a metal surface so the modified bitumen cools down rapidly. Dry aggregates of 8 - 11 mm of the type *Nederlandse steenslag* are distributed over the thin film and are pressed by hand into the bitumen. After a few hours it is demonstrated that the bitumen has a good interaction with the stones as the bitumen went up the stones for at least 0.5 mm. After one day a stone was picked by hand and was pulled-out out for 2 cm from the film. However, the bitumen was elastically deformed and a strand of 2 cm of bitumen was formed between the surface and the stones. This is clearly demonstrating that the adhesion between the stone and the bitumen is very good and that the bitumen film formed exhibits good elastic properties.

The stripping test performed on this sample (immersion in water having a temperature of 70°C, for a period of 0.5 hours) showed a with-bitumen-covered area of 97%. After the addition of 0.4 wt.% of Promak Addibit L 100 a with-bitumen-covered area of 100% was observed. Therefore the ratio between the stone loss observed with and without the addition of Promak Addibit L100 is 0.97.

A Vialit test on the Promak Addibit L100 containing sample showed the following loss of stone after impact deformation at different temperatures:

| Temperature | Percentage of stone loss |
|---|---|
| 10°C | 0 % |
| 5°C | 5 % |
| 0°C | 25 % |
| -5°C | 50 % |
| -10°C | 76 % |

Example 3

The same composition as described in example 1 was prepared, however, the paraffinic bitumen was now replaced by a 50-50 mixure of 160/220 paraffinic and 160/220 bitumen on the basis of crude oil from Venezuela, which was obtained from Nynas, Zaventem (Belgium). To this composition 0.4 wt.% of Promak Addibit L 100 was added.

A Vialit test performed on this composition showed the following loss of stone after impact deformation at different temperatures:

| Temperature | Percentage of stone loss |
|---|---|
| 10°C | 0 % |
| 5°C | 0 % |
| 0°C | 15 % |
| -5°C | 43 % |
| -10°C | 71 % |

Comparative example 1

The same composition as described in example 1 was prepared, however, the RME was now replaced by Spirdane D70, which was obtained from Total Fina Elf. To this composition 0.4 wt.% of Promak Addibit L 100 was added.

A Vialit test performed on this composition showed the following loss of stone after impact deformation at different temperatures:

| Temperature | Percentage of stone loss |
|---|---|
| 10°C | 2 % |
| 5°C | 19 % |
| 0°C | 74 % |
| -5°C | 100 % |
| -10°C | 100 % |

The stripping test performed on this sample (immersion in water having a temperature of 70°C, for a period of 0.5 hours) showed a with-bitumen-covered area of 90%. This example clearly demonstrates the superior low temperature performance and the performance without adhesion promoters of the described invention.

**Claims**

1. A bituminous binder composition comprising bitumen, an elastomer, an ester diluent and a curing agent, wherein the ester diluent comprises a $C_1$-$C_4$ alkyl ester of an unsaturated fatty acid and wherein the bituminous binder composition comprises 0.05 to 5.0 wt.% of the elastomer, based on the total weight of the bituminous binder composition.

2.  The bituminous binder composition according to claim 1, wherein the bitumen is a paraffinic or a naphtenic bitumen with an average penetration of 10 to 350 $10^{-1}$ mm.

3.  The bituminous binder composition according to claim 1 or claim 2, wherein the elastomer is a polymer or resin comprising two adjacent butadiene units.

4.  The bituminous binder composition according to claim 3, wherein the elastomer is a polybutadiene, a styrene-butadiene diblock terpolymer a styrene-butadiene-styrene triblock terpolymer.

5.  The bituminous binder composition according to claim 4, wherein the elastomer is a polybutadiene.

6.  The bituminous binder composition according to any one of claims 1 - 5, wherein the bituminous binder composition comprises 0.1 to 2.0 wt.% of the elastomer, based on the total weight of the bituminous binder composition.

7.  The bituminous binder composition according to any one of claims 1 - 6, wherein the unsaturated fatty acid is derived from an animal or vegetable oil.

8.  The bituminous binder composition according to any one of claims 1 - 7, wherein the unsaturated fatty acid is derived from rapeseed oil, sunflower oil or isomerised sunflower oil.

9.  The bituminous binder composition according to any one of claims 1 - 8, wherein the unsaturated fatty acid contains at least two unsaturated carbon carbon double bonds.

10. The bituminous binder composition according to any one of claims 1 - 9, wherein the ester diluent is a rapeseed methyl monoester, a sunflower methyl monoester or an isomerised sunflower methyl monoester.

11. The bituminous binder composition according to any one of claims 1 - 10, wherein the bituminous binder composition comprises 0.3 to 30 wt.% of the ester diluent, based on the total weight of the bituminous binder composition.

12. The bituminous binder composition according to any one of claims 1 - 11, wherein the curing agent comprises a sulfur-donor compound.

13. The bituminous binder composition according to any one of claims 1 - 12, wherein the curing agent comprises sulfur, stearic acid or a salt thereof, zinc oxide and/or tetramethyl thiuram disulfide.

14. The bituminous binder composition according to any one of claims 1 - 13, wherein the bituminous binder composition comprises 0.01 to 1.0 wt.% of the curing agent, based on the total weight of the bituminous binder composition.

15. A process of producing a bituminous binder composition comprising the steps of:

    (a) mixing an elastomer and an ester diluent at a temperature of 50° to 150°C wherein the ester diluent comprises a $C_1$-$C_4$ alkyl ester of an unsaturated fatty acid;
    (b) adding at least a part of the mixture as obtained in step (a) to bitumen that has been preheated to a temperature in the range of 100° to 210°C; and
    (c) adding a curing agent to mixture as obtained in step (b).

16. The process according to claim 15, wherein the weight ratio of the elastomer and the ester diluent is in the range of 1:3 to 1:15, based on the total weight of the mixture of elastomer and ester diluent.

17. The process according to claim 15 or claim 16, wherein the bitumen has been preheated to a temperature in the range of 150° to 200°C.

18. The process according to any one of claims 15 - 17, wherein the weight ratio of the mixture as obtained in step (a) and the bitumen is in the range of 1:4 to 1:99, based on the total weight of the bituminous binder composition.

**19.** The process according to any one of claims 15-18, wherein step (c) is conducted under stirring at a temperature in the range of 100° to 210°C.

**20.** The process according to any one of claims 15 - 19, wherein step (c) is conducted at least 60 minutes before usage of the bituminous binder composition.

**21.** Use of a bituminous binder composition of any one of the claims 1 - 14 or according to the process according to any one of claims 15 - 20 for road construction, renovating or sealing.

**22.** Use of a bituminous binder composition of any one of the claims 1 - 14 or according to the process according to any one of claims 15 - 20 in emulsions.

**23.** Bituminous binder composition obtainable by the process according to claims 15 - 20, wherein the bituminous binder composition comprises 0.05 to 5.0 wt.% of the elastomer, based on the total weight of the bituminous binder composition.

**24.** Bituminous binder composition according to claim 23, wherein the bituminous binder composition is **characterized by** a stripping test performance ratio determined according to ACCELERATED NEN-EN 3960 according to the following formula:

$$\frac{\text{Bituminous binder composition containing 0.0 wt.\% Promak Abbidit L 100}}{\text{Bituminous binder composition containing 0.4 wt.\% Promak Abbidit L 100}} \geq 0.75$$

**25.** Bituminous binder composition according to claim 23, wherein the bituminous binder composition is **characterised by** loss of stone after impact deformation at -10°C of less than 80% according to the Vialit NEN-EN 12272-3 test, based on a bituminous binder composition containing 0.4 wt.% Promak Addibit L 100.

**Patentansprüche**

**1.** Bituminöse, Bitumen, ein Elastomer, ein Esterverdünnungsmittel und ein Aushärtemittel umfassende Bindemittelzusammensetzung, worin das Esterverdünnungsmittel einen $C_1$- bis $C_4$-Alkylester einer ungesättigten Fettsäure und die bituminöse Bindemittelzusammensetzung bezogen auf das Gesamtgewicht der bituminösen Bindemittelzusammensetzung 0,05 bis 5,0 Gew.-% an Elastomer umfasst.

**2.** Bituminöse Bindemittelzusammensetzung nach Anspruch 1, worin das Bitumen ein paraffinisches oder ein naphthenisches Bitumen mit einer Durchschnittspenetration von 10 bis 350 x $10^{-1}$ mm ist.

**3.** Bituminöse Bindemittelzusammensetzung nach Anspruch 1 oder 2, worin das Elastomer ein Polymer oder ein zwei benachbarte Butadien-Einheiten umfassendes Harz ist.

**4.** Bituminöse Bindemittelzusammensetzung nach Anspruch 3, worin das Elastomer ein Polybutadien, ein Styrol-Butadien-2 Block-Terpolymer oder ein Styrol-Butadien-Stryrol-3 Block-Terpolymer ist.

**5.** Bituminöse Bindemittelzusammensetzung nach Anspruch 4, worin das Elastomer Polybutadien ist.

**6.** Bituminöse Bindemittelzusammensetzung nach einem der Ansprüche 1 bis 5, worin die bituminöse Bindemittelzusammensetzung bezogen auf das Gesamtgewicht der bituminösen Bindemittelzusammensetzung 0,1 bis 2,0 Gew.-% an Elastomer umfasst.

**7.** Bituminöse Bindemittelzusammensetzung nach einem der Ansprüche 1 bis 6, worin die ungesättigte Fettsäure sich von einem tierischen oder pflanzlichen Öl herleitet.

**8.** Bituminöse Bindemittelzusammensetzung nach einem der Ansprüche 1 bis 7, worin die ungesättigte Fettsäure sich von Rapsöl, Sonnenblumenöl oder isomerisiertem Sonnenblumenöl herleitet.

EP 1 482 012 B1

9. Bituminöse Bindemittelzusammensetzung nach einem der Ansprüche 1 bis 8, worin die ungesättigte Fettsäure mindestens zwei ungesättigte Kohlenstoff-Kohlenstoff-Doppelbindungen enthält.

10. Bituminöse Bindemittelzusammensetzung nach einem der Ansprüche 1 bis 9, worin das Esterverdünnungsmittel ein Raps-Methylmonoester, ein Sonnenblumen-Methylmonoester oder ein isomerisierter Sonnenblumen-Methylmonoester ist.

11. Bituminöse Bindemittelzusammensetzung nach einem der Ansprüche 1 bis 10, worin die bituminöse Bindemittelzusammensetzung bezogen auf das Gesamtgewicht der bituminösen Bindemittelzusammensetzung 0,3 bis 30 Gew.-% an Esterverdünnungsmittel umfasst.

12. Bituminöse Bindemittelzusammensetzung nach einem der Ansprüche 1 bis 11, worin das Aushärtemittel eine Schwefeldonor-Verbindung umfasst.

13. Bituminöse Bindemittelzusammensetzung nach einem der Ansprüche 1 bis 12, worin das Aushärtemittel Schwefel, Stearinsäure oder ein Salz davon, Zinkoxid und/oder Tetramethylthiuramdisulfid umfasst.

14. Bituminöse Bindemittelzusammensetzung nach einem der Ansprüche 1 bis 13, worin die bituminöse Bindemittelzusammensetzung bezogen auf das Gesamtgewicht der bituminösen Bindemittelzusammensetzung 0,01 bis 1,0 Gew.-% an Aushärtemittel umfasst.

15. Verfahren zur Herstellung einer bituminösen Bindemittelzusammensetzung umfassend die Schritte:

(a) Mischen eines Elastomers und eines Esterverdünnungsmittels bei einer Temperatur von 50°C bis 150°C, worin das Esterverdünnungsmittel einen $C_1$- bis $C_4$-Alkylester einer ungesättigten Fettsäure umfasst,
(b) Zugeben von mindestens einem Teil der in Schritt (a) erhaltenen Mischung zu einem auf eine Temperatur im Bereich von 100°C bis 210°C vorgewärmtem Bitumen und
(c) Zugeben eines Aushärtemittels zu der in Schritt (b) erhaltenen Mischung.

16. Verfahren nach Anspruch 15, worin das Gewichtsverhältnis des Elastomers und des Esterverdünnungsmittels bezogen auf das Gesamtgewicht der Mischung aus Elastomer und Esterverdünnungsmittel im Bereich von 1:3 bis 1:15 liegt.

17. Verfahren nach Anspruch 15 oder 16, worin das Bitumen auf eine Temperatur im Bereich von 150°C bis 200°C vorgewärmt wurde.

18. Verfahren nach einem der Ansprüche 15 bis 17, worin das Gewichtsverhältnis der in Schritt (a) erhaltenen Mischung und des Bitumens bezogen auf das Gesamtgewicht der bituminösen Bindemittelzusammensetzung im Bereich von 1:4 bis 1:99 liegt.

19. Verfahren nach einem der Ansprüche 15 bis 18, worin Schritt (c) unter Rühren bei einer Temperatur im Bereich von 100°C bis 210°C durchgeführt wird.

20. Verfahren nach einem der Ansprüche 15 bis 19, worin Schritt (c) mindestens 60 min vor Verwendung der bituminösen Bindemittelzusammensetzung ausgeführt wird.

21. Verwendung einer bituminösen Bindemittelzusammensetzung nach einem der Schritte 1 bis 14 oder nach dem Verfahren nach einem der Ansprüche 15 bis 17 für den Straßenbau, für die Straßenerneuerung oder-versiegeiung.

22. Verwendung einer bituminösen Bindemittelzusammensetzung nach einem der Ansprüche 1 bis 14 oder nach dem Verfahren nach einem der Ansprüche 15 bis 20 in Emulsionen.

23. Durch das Verfahren nach den Ansprüchen 15 bis 20 erhältliche bituminöse Bindemittelzusammensetzung, worin die bituminöse Bindemittelzusammensetzung bezogen auf das Gesamtgewicht der bituminösen Bindemittelzusammensetzung 0,05 bis 5,0 Gew.-% an Elastomer enthält.

24. Bituminöse Bindemittelzusammensetzung nach Anspruch 23, worin die bituminöse Binddemittelzusammensetzung durch das nach beschleunigtem NEN-EN 3960 durch Durchführung des Schältests festgelegte Verhältnis durch die

folgende Formel

$$\frac{\text{bituminöse Bindemittelzusammensetzung enthaltend 0,0 Gew.-\% Promak Abbidit L100}}{\text{bituminöse Bindemittelzusammensetzung enthaltend 0,4 Gew.-\% Promak Abbidit L100}} \geq 0,75$$

charakterisiert ist.

**25.** Bituminöse Bindemittelzusammensetzung nach Anspruch 23, worin die bituminöse Bindemittelzusammensetzung nach dem Vialit NEN-EN 12272-3 Test bei -10°C durch einen weniger als 80%igen Verlust von Steinchen nach Aufprallverformung, bezogen auf die 0,4 Gew.-% Promak Addibit L 100 enthaltende Bindemittelzusammensetzung, charakterisiert ist.

## Revendications

**1.** Composition de liant bitumineux comprenant du bitume, un élastomère, un diluant ester et un agent de durcissement, dans laquelle le diluant ester comprend un ester d'alkyle en $C_1$-$C_4$ d'un acide gras insaturé et dans laquelle la composition de liant bitumineux comprend de 0,05 % à 5,0 % en poids de l'élastomère, par rapport au poids total de la composition de liant bitumineux.

**2.** Composition de liant bitumineux selon la revendication 1, dans laquelle le bitume est un bitume paraffinique ou naphténique avec une pénétration moyenne de 10 à 350 $10^{-1}$ mm.

**3.** Composition de liant bitumineux selon la revendication 1 ou la revendication 2, dans laquelle l'élastomère est un polymère ou une résine comprenant deux unités butadiène adjacentes.

**4.** Composition de liant bitumineux selon la revendication 3, dans laquelle l'élastomère est un polybutadiène, un terpolymère diséquencé styrène-butadiène, un terpolymère triséquencé styrène-butadiène-styrène.

**5.** Composition de liant bitumineux selon la revendication 4, dans laquelle l'élastomère est un polybutadiène.

**6.** Composition de liant bitumineux selon l'une quelconque des revendications 1 à 5, dans laquelle la composition de liant bitumineux comprend de 0,1 % à 2,0 % en poids de l'élastomère, par rapport au poids total de la composition de liant bitumineux.

**7.** Composition de liant bitumineux selon l'une quelconque des revendications 1 à 6, dans laquelle l'acide gras insaturé est obtenu à partir d'une huile végétale ou animale.

**8.** Composition de liant bitumineux selon l'une quelconque des revendications 1 à 7, dans laquelle l'acide gras insaturé est obtenu à partir d'huile de colza, d'huile de tournesol ou d'huile de tournesol isomérisée.

**9.** Composition de liant bitumineux selon l'une quelconque des revendications 1 à 8, dans laquelle l'acide gras insaturé contient au moins deux double liaisons carbone-carbone insaturées.

**10.** Composition de liant bitumineux selon l'une quelconque des revendications 1 à 9, dans laquelle le diluant ester est un monoester de méthyle d'huile de colza, un monoester de méthyle d'huile de tournesol ou un monoester de méthyle d'huile de tournesol isomérisée.

**11.** Composition de liant bitumineux selon l'une quelconque des revendications 1 à 10, dans laquelle la composition de liant bitumineux comprend de 0,3 % à 30 % en poids du diluant ester, par rapport au poids total de la composition de liant bitumineux.

**12.** Composition de liant bitumineux selon l'une quelconque des revendications 1 à 11, dans laquelle l'agent de durcissement comprend un composé donneur de soufre.

**13.** Composition de liant bitumineux selon l'une quelconque des revendications 1 à 12, dans laquelle l'agent de durcissement comprend du soufre, de l'acide stéarique ou un sel de celui-ci, de l'oxyde de zinc et/ou du disulfure de thiurame de tétraméthyle.

**14.** Composition de liant bitumineux selon l'une quelconque des revendications 1 à 13, dans laquelle la composition de liant bitumineux comprend de 0,01 % à 1,0 % en poids de l'agent de durcissement, par rapport au poids total de la composition de liant bitumineux.

**15.** Procédé de production d'une composition de liant bitumineux comprenant les étapes de :

(a) mélange d'un élastomère et d'un diluant ester à une température de 50°C à 150°C, dans lequel le diluant ester comprend un ester d'alkyle en $C_1$-$C_4$ d'un acide gras insaturé ;
(b) addition d'au moins une partie du mélange obtenu dans l'étape (a) au bitume qui a été préchauffé à une température dans la gamme de 100°C à 210°C; et
(c) addition d'un agent de durcissement au mélange obtenu dans l'étape (b).

**16.** Procédé selon la revendication 15, dans lequel le rapport en poids de l'élastomère et du diluant ester est dans le domaine de 1:3 à 1:15, par rapport au poids total du mélange d'élastomère et de diluant ester.

**17.** Procédé selon la revendication 15 ou la revendication 16, dans lequel le bitume a été préchauffé à une température dans la gamme de 150°C à 200°C.

**18.** Procédé selon l'une quelconque des revendications 15 à 17, dans lequel le rapport en poids du mélange obtenu dans l'étape (a) et du bitume est dans la gamme de 1:4 à 1:99, par rapport au poids total de la composition de liant bitumineux.

**19.** Procédé selon l'une quelconque des revendications 15 à 18, dans lequel l'étape (c) est réalisée sous agitation à une température dans le domaine de 100°C à 210°C.

**20.** Procédé selon l'une quelconque des revendications 15 à 19, dans lequel l'étape (c) est réalisée au moins 60 minutes avant l'utilisation de la composition de liant bitumineux.

**21.** Utilisation d'une composition de liant bitumineux selon l'une quelconque des revendications 1 à 14 ou selon le procédé selon l'une quelconque des revendications 15 à 20 pour la construction, la rénovation ou de l'étanchéification des routes.

**22.** Utilisation d'une composition de liant bitumineux selon l'une quelconque des revendications 1 à 14 ou selon le procédé selon l'une quelconque des revendications 15 à 20 en émulsions.

**23.** Composition de liant bitumineux pouvant être obtenue par le procédé selon les revendications 15 à 20, dans laquelle la composition de liant bitumineux comprend de 0,05 % à 5,0 % en poids de l'élastomère, par rapport au poids total de la composition de liant bitumineux.

**24.** Composition de liant bitumineux selon la revendication 23, dans laquelle la composition de liant bitumineux est **caractérisée par** un rapport de performance au tests d'abrasion selon ACCELERATED NEN-EN 3960 selon la formule suivante :

$$\frac{\text{composition de liant bitumineux contenant 0,0 \% en poids de Promak Abbidit L 100}}{\text{composition de liant bitumineux contenant 0,4 \% en poids de Promak Abbidit L 100}} \geq 0,75$$

**25.** Composition de liant bitumineux selon la revendication 23, dans laquelle la composition de liant bitumineux est **caractérisée par** une perte de pierre après déformation par impact à -10°C inférieure à 80 % selon le test Vialit NEN-EN 12272-3, par rapport à une composition de liant bitumineux contenant 0,4 % en poids de Promak Addibit L 100.